# FASCICULE DE BREVET EUROPEEN

(11) **EP 2 315 734 B1**
(45) Date de publication et mention de la délivrance du brevet: **04.09.2013**
(21) Numéro de dépôt: 09737053.0
(22) Date de dépôt: 13.07.2009
(51) Int. Cl.: C04B 35/83, F02K 9/97

(54) **PROCEDE DE REALISATION D'UNE TUYERE OU D'UN DIVERGENT DE TUYERE EN MATERIAU COMPOSITE**
VERFAHREN ZUR HERSTELLUNG EINER DÜSE ODER EINES DIVERGENTEN DÜSENELEMENTS AUS EINEM VERBUNDWERKSTOFF
METHOD OF PRODUCING A NOZZLE OR A DIVERGENT NOZZLE ELEMENT MADE OF A COMPOSITE

(30) Priorité: 17.07.2008 FR 0854859
(43) Date de publication de la demande: 04.05.2011
(73) Titulaire: HERAKLES, 33185 Le Haillan (FR)
(72) Inventeur: CHARLEUX, François, F-33000 Bordeaux (FR); PARENTEAU, Jean-Marie, F-33000 Bordeaux (FR); DELPERIER, Bernard, F-33700 Merignac (FR)
(74) Mandataire: Joly, Jean-Jacques
(86) Numéro de dépôt international: PCT/FR2009/051397
(87) Numéro de publication internationale: WO 2010/007308

(56) Documents cités:
- EP-A- 0 555 130
- EP-A- 0 633 233
- EP-A- 1 932 653
- WO-A-01/38625
- WO-A-96/31447
- FR-A- 2 832 762
- FR-A- 2 907 778
- FR-A1- 2 882 356
- US-A- 4 182 495
- US-A- 5 048 289

## Description

### Arrière-plan de l'invention

L'invention concerne la réalisation d'une tuyère ou d'un divergent de tuyère en une seule pièce en matériau composite comprenant un renfort fibreux densifié par une matrice.

Le domaine d'application de l'invention est plus particulièrement celui des tuyères pour moteurs fusées ou moteurs aéronautiques.

Pour des pièces destinées à être utilisées dans le domaine spatial ou aéronautique, il est bien connu d'utiliser des matériaux composites thermostructuraux, c'est-à-dire des matériaux composites ayant des propriétés mécaniques qui les rendent aptes à constituer des éléments de structure et ayant la capacité de conserver ces propriétés à des températures élevées. De tels matériaux thermostructuraux sont notamment les matériaux composites carbone/carbone ou C/C (renfort en fibres de carbone et matrice en carbone) et les matériaux composites à matrice céramique ou CMC, par exemple C/SiC (renfort en fibres de carbone et matrice en carbure de silicium), C/C-SiC (renfort en fibres de carbone et matrice mixte carbone-carbure de silicium) ou encore SiC/SiC.

Le renfort fibreux pour des matériaux composites thermostructuraux peut être obtenu par bobinage filamentaire ou par superposition de strates fibreuses sur une forme, afin d'obtenir une préforme fibreuse ayant une forme voisine de celle de la pièce à réaliser. Les strates fibreuses peuvent être liées entre elles, notamment par aiguilletage en utilisant des aiguilles à barbes qui déplacent des fibres transversalement par rapport aux strates, apportant une liaison entre strates qui accroît la résistance au délaminage, c'est-à-dire la résistance à la séparation inter-strates.

La densification du renfort fibreux par une matrice carbone ou céramique peut être effectuée par voie liquide ou par infiltration chimique en phase gazeuse, ou CVI ("Chemical Vapor Infiltration"). La densification par voie liquide comprend, de façon bien connue, une imprégnation du renfort fibreux par une composition liquide contenant une résine précurseur de carbone ou céramique puis la polymérisation et la pyrolyse de la résine pour obtenir un résidu carbone ou céramique, plusieurs cycles consécutifs d'imprégnation, polymérisation et pyrolyse pouvant éventuellement être réalisés. La densification par CVI est réalisée de façon bien connue en disposant le renfort fibreux dans une enceinte et en admettant dans l'enceinte une phase gazeuse réactionnelle qui, dans des conditions déterminées notamment de pression et de température, diffuse au sein du renfort fibreux et permet d'obtenir un dépôt du matériau de la matrice par décomposition d'un ou plusieurs constituants de la phase gazeuse ou par réaction entre plusieurs constituants. Pour des pièces de formes particulières, notamment de forme complexe, une première étape de consolidation par voie liquide peut être réalisée en utilisant un outillage approprié, afin de figer le renfort fibreux dans la forme voulue, la densification étant poursuivie sans l'aide d'outillage, par exemple par CVI. L'association d'une consolidation voie liquide et d'une densification par CVI est décrite notamment dans le document EP-A-0 633 233.

La réalisation de divergent de tuyère en matériau composite thermostructural a déjà été proposée.

Ainsi, le document US-A-6 817 184 divulgue un procédé de fabrication d'un divergent en matériau C/SiC à paroi mince par enroulement filamentaire de fils en fibres de carbone et mise en forme pour obtenir des parties de brides intégrées avec continuité du renfort fibreux. Des inserts en tissu de carbone peuvent être introduits pour augmenter localement l'épaisseur. Dans ce même document, une technique antérieure est évoquée consistant à disposer des couches de tissu superposées sur une forme, à imprégner les couches de tissu par une résine précurseur de carbone et, après pyrolyse de la résine, à réaliser une infiltration par du silicium fondu pour obtenir un composite C/SiC.

Un autre processus connu et utilisé par la déposante comprend la formation d'un renfort fibreux par superposition et aiguilletage de strates fibreuses sur un mandrin et la densification du renfort fibreux par une matrice obtenue par CVI. Comme indiqué plus haut, en comparaison avec un renfort fibreux en couches superposées non liées entre elles, l'aiguilletage apporte une résistance au délaminage, donc une meilleure tenue mécanique. Pour obtenir un renfort aiguilleté ayant des caractéristiques sensiblement uniformes, il est toutefois nécessaire de réaliser une préforme aiguilletée relativement épaisse dont seule la partie centrale est utilement exploitable. Par exemple, pour obtenir une épaisseur de renfort utile de 3 mm, une préforme fibreuse aiguilletée de 20 mm d'épaisseur totale est nécessaire. La réalisation du renfort fibreux est donc longue et coûteuse, nécessite diverses manipulations et conduit à d'importantes pertes de matière. En outre, le taux volumique de fibres dans le renfort fibreux aiguilleté est relativement faible, ce qui limite les propriétés mécaniques du divergent de tuyère ou de la tuyère obtenus.

### Objet et résumé de l'invention

L'invention a pour but de proposer un procédé permettant de réaliser une tuyère ou un divergent de tuyère en matériau composite à paroi mince et ayant une très bonne tenue mécanique, tout en évitant les inconvénients précités.

Ce but est atteint grâce à un procédé comprenant :
- l'obtention de panneaux en une texture fibreuse obtenue par tissage tridimensionnel ;
- la formation d'une préforme fibreuse par conformation des panneaux sur une forme ayant une surface reproduisant la géométrie désirée d'une surface interne ou externe de la tuyère ou du divergent de tuyère à réaliser et par liaison des panneaux au niveau de bords en contact mutuel ;
- la formation d'un renfort fibreux consolidé par mise en forme de la préforme fibreuse imprégnée par une composition de consolidation comprenant une résine, la mise en forme étant réalisée entre la forme et une enveloppe appliquée contre la préforme fibreuse imprégnée de manière à obtenir un renfort fibreux consolidé ayant un taux volumique de fibres d'au moins 35%, et ayant sur au moins une plus grande partie de sa dimension axiale une épaisseur au plus égale à 5 mm formée par une couche unique de panneaux de texture fibreuse ; et
- la poursuite de la densification du renfort fibreux consolidé par infiltration chimique en phase gazeuse après pyrolyse de la résine de sorte qu'après densification une pièce est obtenue ayant pratiquement la forme et l'épaisseur de paroi de la tuyère ou du divergent de tuyère à réaliser.
   Le procédé selon l'invention est remarquable en ce qu'il permet, à la fois :
- d'obtenir directement une tuyère ou un divergent de tuyère très léger à paroi mince, typiquement une paroi qui, sur la plus grande partie de sa dimension axiale, a une épaisseur au plus égale à environ 5 mm, avantageusement au plus égale à 3 mm, voire inférieure à 2 mm, par exemple comprise entre 2 mm et 1 mm ou encore moins, tout en pouvant avoir des dimensions relativement importantes, telles qu'une dimension axiale pouvant dépasser 2000 mm et un diamètre de sortie interne pouvant dépasser 3000 mm ;
- d'obtenir directement une tuyère ou un divergent de tuyère ayant une forme très proche de sa forme complète définitive ("near net shape"), c'est-à-dire avec une surface principale interne ou externe et, avantageusement aussi, au moins une grande partie de son autre surface principale, ayant les formes voulues sans nécessiter d'usinage de ces surfaces au stade de la pièce finie ou même au stade du renfort fibreux ; on peut ainsi obtenir directement le profil aérodynamique souhaité, un éventuel usinage final pouvant être limité aux extrémités longitudinales, en particulier un usinage fonctionnel pour aménager des parties d'interface et de fixation ;
- d'obtenir une tuyère ou un divergent de tuyère ayant des propriétés mécaniques élevées grâce à l'utilisation de panneaux en une texture fibreuse obtenue par tissage tridimensionnel (3D), c'est-à-dire avec plusieurs couches de fils liées par tissage, ce qui réduit le risque de délaminage en comparaison avec des strates bidimensionnelles (2D) superposées sous forme de tissus 2D ou de nappes, et grâce à un taux de fibres relativement élevé.

En outre, la densification est réalisée sur un renfort fibreux qui est consolidé, donc partiellement densifié, et qui est d'épaisseur limitée correspondant à celle de la paroi de la tuyère ou du divergent de tuyère à réaliser. Une densification d'un tel renfort fibreux mince peut alors être obtenue avec un faible ou très faible gradient de densification dans son épaisseur.

De préférence, la mise en forme de la préforme fibreuse est réalisée de manière à obtenir un renfort fibreux présentant des parties de raidissement intégrées au moins dans des parties d'extrémité axiale. Les parties de raidissement garantissent le respect de la géométrie souhaitée, en dépit de la très faible épaisseur de paroi, au moins jusqu'à densification du renfort fibreux.

Au moins l'une des parties de raidissement peut être obtenue en conférant à une partie d'extrémité axiale du renfort fibreux un profil formant un angle ou en augmentant localement l'épaisseur de paroi du renfort fibreux.

Les panneaux de texture fibreuse peuvent être conformés sur la forme avec recouvrement de leurs bords voisins.

La préforme fibreuse peut être formée avec au moins une surépaisseur s'étendant circonférentiellement tout autour d'un axe de la préforme, la sur-épaisseur étant par exemple obtenue par recouvrement de bords voisins de panneaux de texture fibreuse.

La liaison des panneaux entre eux pour former la préforme fibreuse peut être réalisée par couture.

Avantageusement, lors de sa mise en forme pour former le renfort fibreux, la préforme fibreuse imprégnée est comprimée pour avoir un taux volumique de fibres élevé. Lors de la compression de la préforme fibreuse imprégnée, on applique avantageusement sur la préforme fibreuse une membrane par exemple en élastomère qui est déformable élastiquement sans formation de plis. On peut ainsi obtenir un renfort fibreux dont la surface opposée à celle appliquée sur la forme est exempte de défauts.

L'imprégnation par la composition de consolidation peut être réalisée sur la texture fibreuse avant conformation des panneaux de texture fibreuse sur la forme.

De préférence, avant mise en forme de la préforme fibreuse pour former le renfort fibreux, une pré-réticulation de la résine de consolidation est réalisée. La raideur de la texture fibreuse peut ainsi être augmentée pour éviter une compression ultérieure trop importante. La pré-réticulation de la résine peut être réalisée au moins en partie avant conformation des panneaux de texture fibreuse imprégnée.

L'invention vise aussi des tuyères ou divergents de tuyère en matériau composite à paroi mince et de faible masse ainsi obtenus, notamment des tuyères ou divergents de tuyère ayant sur la plus grande partie de leur dimension axiale une épaisseur au plus égale à 3 mm, même comprise entre 1 mm et 2 mm, tout en pouvant avoir des dimensions relativement importantes, telles qu'une dimension axiale au moins égale à 800 mm et un diamètre interne à l'extrémité aval au moins égal à 1000 mm.

### Brève description des dessins

Des modes de réalisation de l'invention seront décrits ci-après, à titre indicatif mais non limitatif, en référence aux dessins annexés sur lesquels :
- la figure 1 est une demi-vue en coupe axiale d'un exemple de divergent de tuyère qui peut être réalisé par un procédé selon l'invention ;
- la figure 2 montre des étapes d'un procédé selon un mode de mise en oeuvre de l'invention ;
- la figure 3 est un exemple d'armure interlock pour le tissage 3D de strate fibreuse ;
- les figures 4 à 8 illustrent des étapes successives de la réalisation d'une préforme fibreuse pour la fabrication du divergent de tuyère de la figure 1, selon un mode de mise en oeuvre de l'invention, la figure 5 étant une vue partielle en coupe selon le plan V-V d'un détail de la figure 4 ;
- la figure 9 est une demi-vue en coupe axiale à échelle agrandie montrant la conformation de panneaux de texture fibreuse sur une forme pour la réalisation d'une partie de préforme fibreuse à épaisseur évolutive ;
- la figure 10 est une demi-vue en coupe axiale montrant un renfort fibreux de divergent de tuyère obtenu par compression de préforme fibreuse entre une forme et une enveloppe avec interposition d'une membrane en élastomère ;
- la figure 11 est une photographie d'un divergent de tuyère tel qu'obtenu par un procédé conforme à l'invention, avant usinage final ; et
- la figure 12 est une vue en perspective d'un exemple de tuyère qui peut être réalisée par un procédé selon l'invention.

### Description détaillée de modes de réalisation

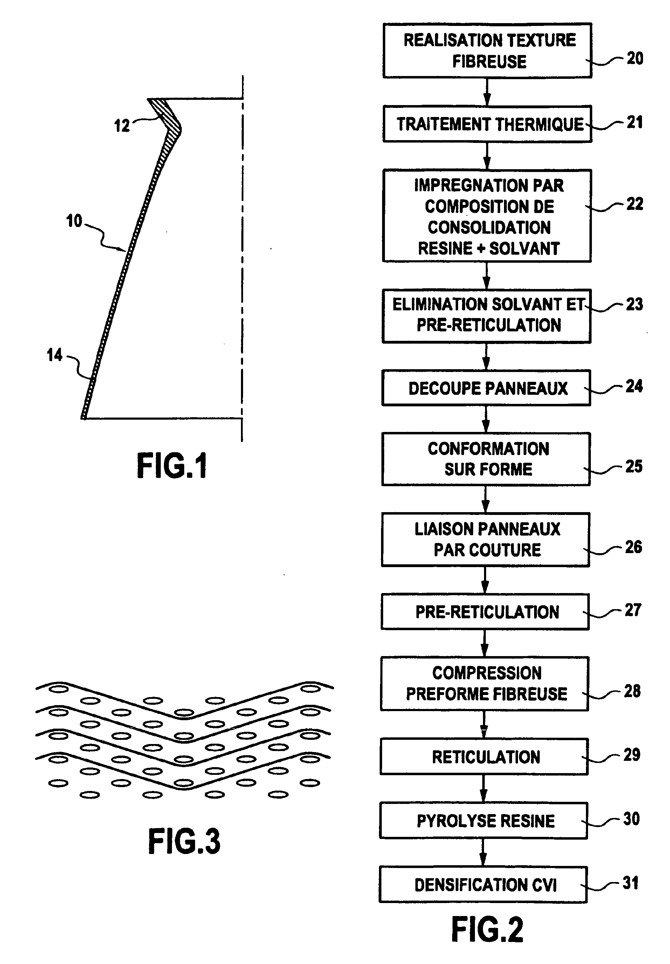

La figure 1 montre en demi-coupe axiale un divergent de tuyère 10 de moteur fusée pouvant être réalisé par un procédé selon l'invention.

Le divergent de tuyère 10 peut être en un matériau composite carbone/carbone (C/C) comprenant un renfort fibreux en fibres de carbone densifié par une matrice également en carbone. Le divergent de tuyère peut aussi être en un matériau composite carbone/carbone-céramique, comprenant un renfort fibreux en fibres de carbone densifié par une matrice mixte carbone-céramique, la céramique formant une phase externe de la matrice et apportant une protection contre l'oxydation. La phase céramique de la matrice peut être en carbure de silicium ou être formée par un système ternaire Si-B-C, par exemple. Le divergent de tuyère peut encore être en matériau composite carbone/céramique comprenant un renfort fibreux en fibres de carbone densifié par une matrice en céramique ou essentiellement en céramique.

Le divergent de tuyère 10 est dans cet exemple axisymétrique avec une partie amont 12 formant bride de fixation prolongée vers l'aval par une partie 14 formant un divergent proprement dit, les termes amont et aval étant utilisés ici en référence à la direction d'écoulement de gaz dans le divergent. La bride 12 permet la fixation du divergent 10 sur un corps de moteur fusée, en sortie d'une chambre de combustion. Dans la partie 12 formant bride, depuis l'extrémité amont, l'épaisseur de paroi du divergent 10 décroît progressivement et est ensuite sensiblement constante et minimale dans la partie 14. En outre, dans la partie 12 formant bride et depuis l'extrémité amont, le diamètre est décroissant pour croître ensuite progressivement dans la partie 14, le diamètre du divergent 10 étant donc minimum au niveau du raccordement entre les parties 12 et 14.

Une première étape 20 du procédé (figure 2) consiste à réaliser une texture fibreuse formant une texture de base pour le renfort fibreux du matériau composite. La texture est de préférence obtenue par tissage tridimensionnel (3D) de fibres de carbone. On pourra réaliser un tissage multicouches à armure interlock dont un plan est montré sur la figure 3. Chaque couche de fils de chaîne lie plusieurs couches de fils de trame (montrés en coupe) avec tous les fils d'une même colonne de chaîne ayant le même mouvement dans le plan de l'armure. D'autres types de tissage multicouches peuvent être toutefois utilisés, notamment des tissages à armure multi-toile ou multi-satin. Différents modes de tissage 3D de type multicouches sont décrits dans le document WO-A-2006/136755.

La texture fibreuse est avantageusement soumise à un traitement thermique (étape 21), à une température comprise entre 1400°C et 2200°C et sous vide ou atmosphère neutre, par exemple sous azote ou argon. Ce traitement thermique a notamment un effet de purification (élimination d'éléments N, O, Na, Ca contenus dans les fibres) et permet d'obtenir de meilleures propriétés thermomécaniques pour le matériau composite.

La texture fibreuse est imprégnée par une composition de consolidation (étape 22). L'imprégnation peut être réalisée simplement par immersion dans un bain d'une résine dans un solvant. On utilise une résine qui, après séchage et polymérisation laisse un résidu solide capable d'assurer une consolidation de renfort fibreux avant pyrolyse de la résine et densification finale par CVI, comme décrit plus loin. A titre d'exemple, on utilise une résine précurseur de carbone choisie parmi des résines phénoliques ou époxides. L'imprégnation est de préférence réalisée de manière à apporter une quantité de résine telle qu'après les étapes ultérieures de compression de mise en forme de la préforme, réticulation de la résine et pyrolyse de la résine réticulée, le taux volumique de résidu de pyrolyse de la résine dans le renfort fibreux consolidé obtenu est compris entre 5% et 15% (c'est-à-dire le pourcentage du volume apparent du renfort fibreux occupé par le résidu de pyrolyse de la résine).

La texture fibreuse imprégnée est égouttée et placée en étuve pour éliminer le solvant de la résine et réaliser éventuellement une pré-réticulation de la résine (étape 23). La pré-réticulation permet d'accroître la raideur de la texture fibreuse mais est limitée pour laisser la souplesse nécessaire en vue de la conformation ultérieure.

Des panneaux sont ensuite découpés dans la texture fibreuse imprégnée (étape 24) pour former une préforme fibreuse par conformation et assemblage des panneaux.

On notera que l'imprégnation pourrait être réalisée après découpe des panneaux, auquel cas le traitement thermique mentionné plus haut pourrait être réalisé avant ou après découpe des panneaux et avant imprégnation.

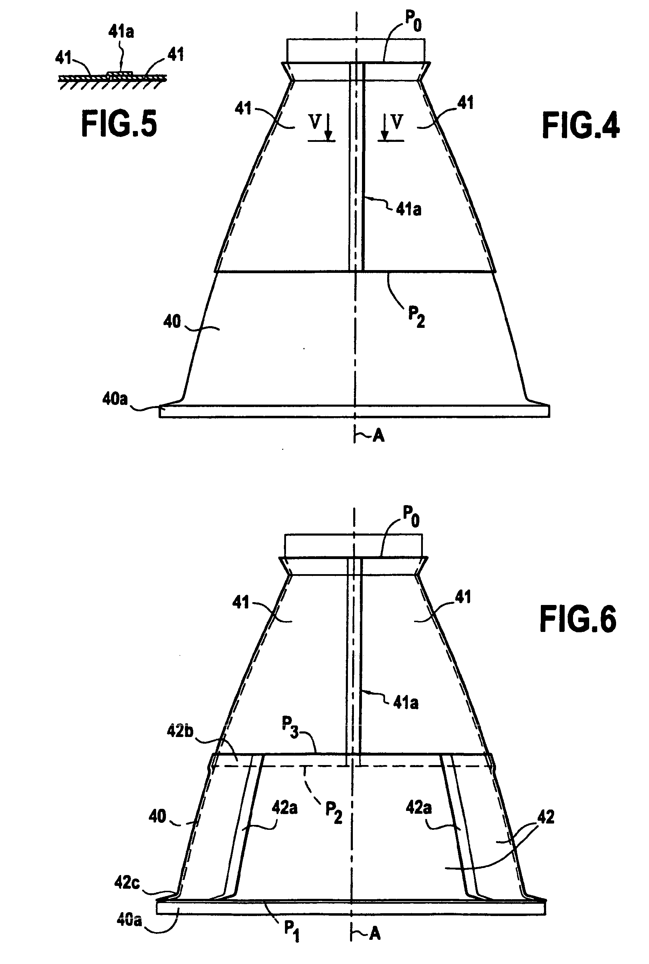

Les panneaux de texture fibreuse imprégnée sont conformés sur une forme mâle 40 (figures 5 à 8) dont la surface extérieure reproduit le profil souhaité pour la surface interne du divergent de tuyère à réaliser, afin de réaliser une préforme fibreuse (étape 25).

Une première série de panneaux 41 est disposée sur la forme 40 autour de l'axe A. Les panneaux 41 s'étendent chacun entre deux plans radiaux P₀ et P₂ et deux plans méridiens. Le plan P₀ correspond au plan dans lequel se trouvent les extrémités amont de la préforme fibreuse et du divergent de tuyère à réaliser. Le plan P₂ se situe approximativement dans la partie médiane de la préforme fibreuse à réaliser. Les panneaux 41 sont juxtaposés avec recouvrement de leurs bords voisins en formant des sur-épaisseurs 41a,comme le montre la figure 5. Dans l'exemple illustré, les panneaux 41 sont au nombre de quatre.

Une deuxième série de panneaux 42 est disposée sur la forme 40 autour de l'axe A de celui-ci. Les panneaux 42 s'étendent chacun entre deux plans radiaux P₃ et P₁ et deux plans méridiens, le plan P1 correspondant au plan dans lequel se trouvent les extrémités aval de la préforme et du divergent de tuyère à réaliser et le plan P₃ se situant légèrement en amont du plan P₂. Les panneaux 42 sont juxtaposés avec recouvrement de leurs bords adjacents en formant des sur-épaisseurs 42a, de la même façon que les panneaux 41. En outre, en direction axiale, les panneaux 41 et 42 sont juxtaposés avec recouvrement de leurs bords adjacents formant une sur-épaisseur 42b entre les plans P₂ et P₃, les bords des panneaux 42 venant par-dessus les bords des panneaux 41. Dans l'exemple illustré, les panneaux 42 sont également au nombre de quatre mais sont décalés angulairement par rapport aux panneaux 41 de sorte que les zones de recouvrement entre bords adjacents des panneaux 41 ne sont pas dans la continuité des zones de recouvrement entre bords adjacents des panneaux 42.

A son extrémité correspondant à l'extrémité aval de la préforme et du divergent de tuyère à réaliser, la forme 40 présente une partie de plus grand diamètre formant un rebord 40a. Les extrémités situées à ce niveau des panneaux 42 sont recourbées vers l'extérieur par appui sur la partie 40a de la forme 40 et forment ainsi un rebord annulaire ou bride 42c.

L'épaisseur de la texture fibreuse tissée 3D est choisie de manière à former en une seule couche le renfort fibreux du divergent de tuyère dans sa partie d'épaisseur minimale, après compression de la préforme fibreuse comme décrit plus loin. Cette partie d'épaisseur minimale du divergent de tuyère s'étend sur la plus grande partie de sa dimension axiale.

Dans la partie amont correspondant à la partie de plus grande épaisseur du divergent de tuyère à réaliser, plusieurs couches de texture fibreuse sont superposées.

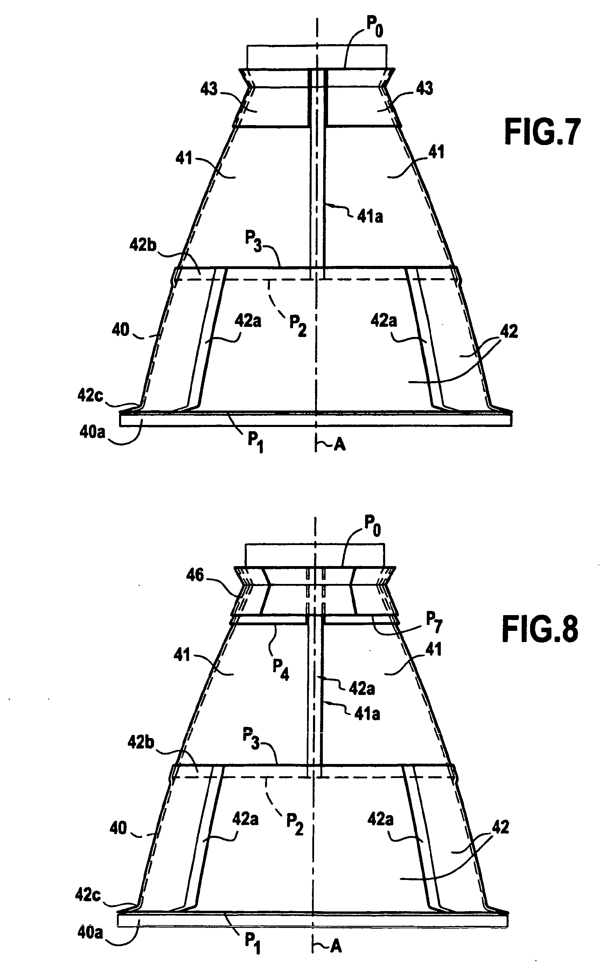

Ainsi, comme le montrent les figures 7 à 9, une série de panneaux 43 est disposée au-dessus de la partie amont des panneaux 42, les panneaux 43 s'étendant entre le plan P₀ et un plan radial P₄ correspondant à l'emplacement où débute vers l'amont l'augmentation d'épaisseur du divergent de tuyère à réaliser. Les panneaux sont au nombre de quatre s'étendant chacun dans l'intervalle entre deux sur-épaisseurs 42a.

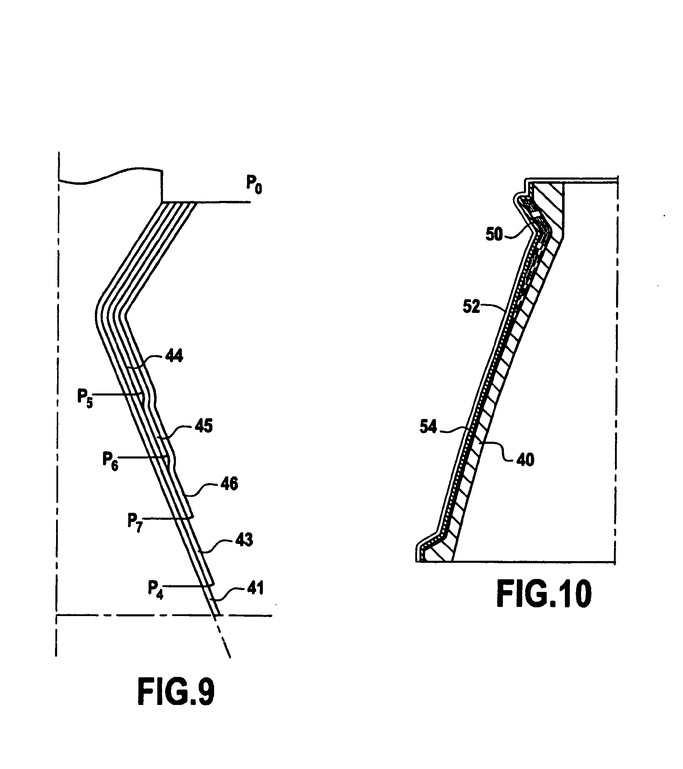

Une série supplémentaire de quatre panneaux 44 (figure 9) est disposée sur les panneaux 43, les panneaux 44 s'étendant entre le plan P₀ et un plan radial P₅ situé en amont du plan P₄. Les panneaux 44 se raccordent en étant juxtaposés bord à bord le long de plans méridiens décalés angulairement par rapport aux sur-épaisseurs 42a.

Une autre série supplémentaire de quatre panneaux 45 (figure 9) est disposée au-dessus des panneaux 44, les panneaux 45 s'étendant entre le plan P₀ et un plan radial P₆ situé entre les plans P₄ et P₅. Les panneaux 45 se raccordent en étant juxtaposés bord à bord le long de plans méridiens décalés angulairement par rapport aux plans méridiens de raccordement des panneaux 44.

Enfin, une série supplémentaire de quatre panneaux 46 (figures 8 et 9) est disposée au-dessus des panneaux 43, 44, 45, les panneaux 46 s'étendant entre le plan P₀ et un plan médial P₇ situé entre les plans P₄ et P₆, de sorte que les panneaux 46 recouvrent les bords aval des panneaux 44, 45. Les panneaux 46 sont juxtaposés bord à bord le long de plans méridiens décalés angulairement par rapport aux plans méridiens de raccordement des panneaux 43, 44 et 45.

Bien entendu, le nombre et la disposition des séries de panneaux supplémentaires dans la partie amont de la préforme fibreuse sont choisis en fonction du profil d'augmentation d'épaisseur à réaliser.

La liaison des panneaux de texture fibreuse entre eux, pour former une préforme fibreuse cohérente, est réalisée par implantation de fils en carbone ou, de préférence, par couture avec des fils de carbone (étape 26). Les panneaux 41 sont cousus entre eux le long de leurs bords en recouvrement mutuel, de même que les panneaux 42. Les panneaux 41 et 42 sont cousus entre eux le long de leurs bords en recouvrement mutuel formant la sur-épaisseur 42b. Les panneaux 43, 44, 45 et 46 sont assemblés aux panneaux sous-jacents par couture.

Dans chaque série de panneaux, le nombre de panneaux peut bien entendu être différent de quatre, et être différent d'une série à l'autre, notamment selon la capacité des panneaux à épouser la forme du mandrin sans former d'irrégularités notables de surface. De même, le nombre de séries de panneaux définissant l'épaisseur minimale de la préforme fibreuse pourra être unitaire ou supérieur à deux. Cette épaisseur minimale est choisie de manière à avoir, après formation du renfort fibreux et densification, une épaisseur de paroi désirée au plus égale à 5 mm, avantageusement au plus égale à 3 mm voire inférieure à 2 mm, par exemple comprise entre 2 mm et 1 mm, ou encore moins.

Bien entendu, d'autres modes de disposition de panneaux de texture fibreuse peuvent être adoptés, les panneaux étant de préférence choisis avec une taille maximale permettant leur conformation sans déformation substantielle de leur surface.

Par ailleurs, il est possible de réaliser l'imprégnation de la texture fibreuse par application de la composition de consolidation sur la préforme fibreuse, après réalisation de celle-ci.

Après réalisation de la préforme fibreuse, une pré-réticulation de la résine de la composition de consolidation peut être effectuée ou poursuivie (étape 27) de manière à accroître la raideur de la préforme fibreuse tout en lui laissant une souplesse suffisante pour pouvoir être ensuite comprimée. On peut ainsi limiter l'écrasement de la préforme fibreuse lors de la compression ultérieure. La pré-réticulation éventuelle de la résine peut ainsi être réalisée en deux phases, l'une réalisée sur les panneaux de texture fibreuse imprégnés avant leur conformation sur la forme 40 et l'autre après réalisation de la préforme fibreuse, ou en une seule de ces deux phases.

La préforme fibreuse est avantageusement comprimée (étape 28) de manière à obtenir un renfort fibreux avec un taux volumique de fibres désiré, c'est-à-dire de 35% au moins, de préférence entre 35% et 50%. A cet effet, la forme 40 et la préforme fibreuse 50 sont disposées dans une enveloppe souple 52 (figure 9) et l'intérieur de l'enveloppe est relié à un dispositif d'aspiration pour comprimer la préforme fibreuse. Une membrane 54 en élastomère déformable sans former de plis peut être interposée entre l'enveloppe 52 et la préforme 50 afin d'éviter que des plis de l'enveloppe 52 marquent la surface extérieure du renfort fibreux. On notera que dans la mesure où la dépression dans l'enveloppe peut être contrôlée, une pré-réticulation de la résine peut ne pas être nécessaire pour limiter la compression de la préforme fibreuse.

Après compression, une étape 29 de réticulation de la résine est réalisée, de sorte qu'un renfort fibreux consolidé, c'est-à-dire manipulable tout en conservant sa forme, est obtenu.

Le renfort fibreux consolidé est extrait de l'outillage utilisé pour la conformation et la consolidation, la forme 40 étant en plusieurs parties pour pouvoir être démontée.

A son extrémité aval, le renfort fibreux consolidé présente un rebord annulaire correspondant au rebord 42c, ce qui contribue à la rigidification du renfort fibreux consolidé à ce niveau permettant de bien conserver la géométrie souhaitée au moins jusqu'à la fin du processus de fabrication du divergent de tuyère. A son extrémité amont, le renfort fibreux consolidé d'une part présente une sur-épaisseur et d'autre part a un profil formant un angle correspondant à l'angle de raccordement entre la bride 12 et la partie 14 du divergent à réaliser, les deux contribuant à la rigidification et au maintien de la géométrie de l'extrémité amont. On notera qu'une augmentation d'épaisseur peut être prévue aussi à l'extrémité aval pour apporter une fonction de raidisseur, en remplacement ou en complément de la formation d'un rebord extérieur.

Une étape 30 de pyrolyse de la résine réticulée est réalisée, par exemple à une température de 700°C à 1200°C puis le renfort fibreux est densifié par CVI dans un four (étape 31). On notera que la pyrolyse de la résine peut être réalisée lors de la montée en température dans le four CVI en préalable immédiat à la densification.

La densification CVI est réalisée de manière à obtenir une matrice carbone ou une matrice mixte carbone-céramique, par exemple carbone-carbure de silicium (SiC) ou carbone-système ternaire silicium-bore-carbone (Si-B-C), ou encore une matrice céramique, par exemple SiC ou Si-B-C.

Les processus de CVI permettant de densifier un renfort fibreux par une matrice de carbone pyrolytlque ou pyrocarbone (PyC), sont bien connus. Le renfort fibreux est placé dans un four. Une phase gazeuse réactionnelle, précurseur de PyC est introduite dans le four, typiquement une phase gazeuse contenant un ou plusieurs composés hydrocarbonés. Dans des conditions notamment de pression et température prédéterminées, la phase gazeuse réactionnelle diffuse au sein de la porosité interne du renfort fibreux pour y déposer du PyC par décomposition d'un ou plusieurs constituants.

Les processus CVI permettant de former une matrice ou phase de matrice SiC sont également bien connus, la phase gazeuse réactionnelle comprenant typiquement un mélange de méthyltrichlorosilane (MTS) et de gaz hydrogène. Pour former une phase de matrice constituée d'un système ternaire Si-B-C, on peut utiliser une phase gazeuse réactionnelle contenant un mélange de MTS, trichlorure de bore (BCI₃) et gaz hydrogène.

L'épaisseur du renfort fibreux étant limitée, le risque d'un gradient de densification significatif entre le coeur du renfort fibreux et ses parties superficielles est évité.

On obtient alors directement une pièce raidie ayant la forme désirée du divergent de tuyère, au moins au niveau de sa surface interne et avantageusement aussi au niveau de pratiquement toute sa surface externe, un usinage de finition éventuel pouvant être limité aux parties d'extrémité, notamment au niveau de la butée. La partie de raidissement formant rebord extérieur à l'extrémité aval du renfort fibreux consolidé peut être éliminée après densification si elle n'est pas d'utilité pour le divergent.

Par ailleurs, la présence de la sur-épaisseur 42b se traduit par une partie renforcée qui peut constituer un raidisseur ou constituer un support pour un raidisseur dans la partie médiane du divergent.

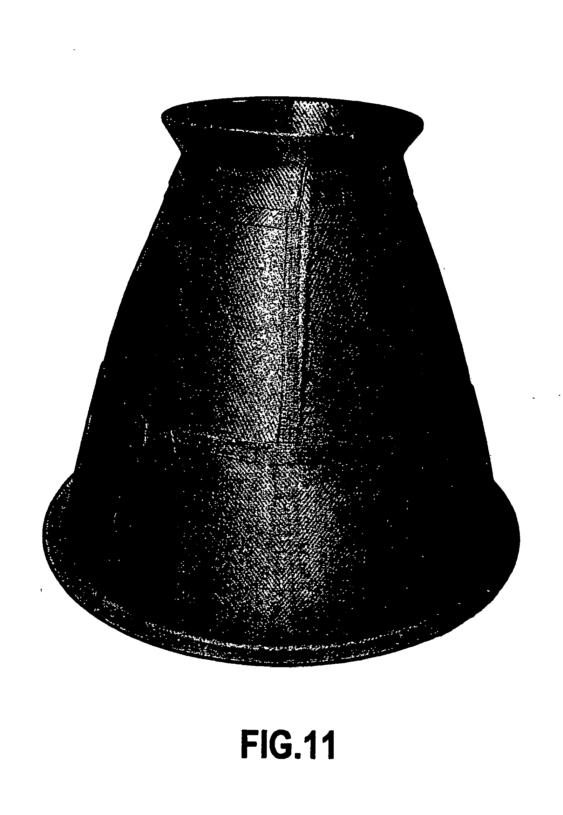

La figure 11 est une photographie montrant un divergent de tuyère après densification et avant usinage final tel qu'obtenu par un procédé semblable à celui décrit en référence aux figures 2 à 10, la texture fibreuse de base utilisée étant un tissu tridimensionnel à armure interlock de 1,5 mm d'épaisseur. Le divergent proprement dit avait un diamètre interne allant de 400 mm environ au niveau du raccordement avec la bride à 1020 mm environ à l'extrémité aval. La longueur totale du divergent était de 970 mm environ dont 850 mm environ pour le divergent proprement dit (hors la bride). De façon remarquable pour une telle dimension, le divergent après densification présentait un taux de fibres élevé d'environ 42% et une masse très faible, à savoir 6,48 kg environ, la masse du renfort fibreux consolidé avant densification finale et après réticulation de la résine étant de 5,52 kg environ. Dans la partie formant divergent proprement dit, l'épaisseur de paroi était de 1,5 mm environ hors zones correspondant aux recouvrements entre panneaux de texture fibreuse.

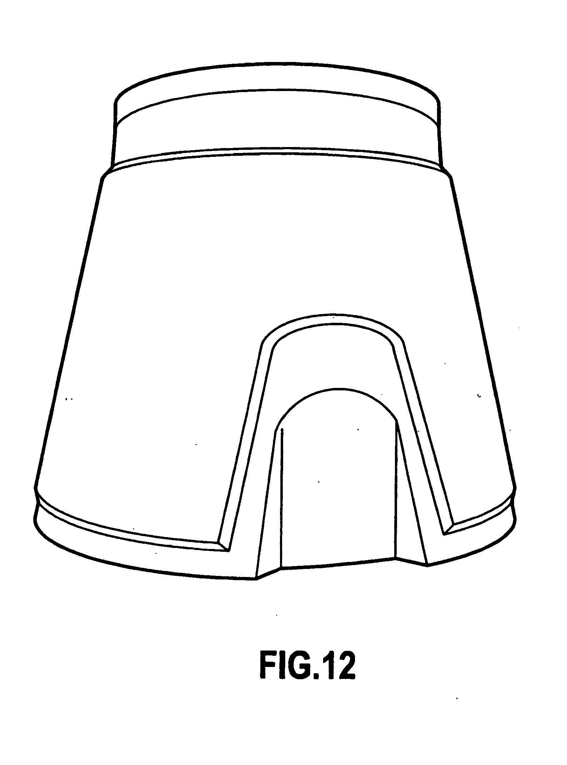

L'invention n'est pas limitée à la réalisation de divergents de tuyères de moteurs-fusées. Elle peut être appliquée à la réalisation de tuyères de moteurs aéronautiques pour avions ou hélicoptères. La figure 12 montre une telle tuyère de moteur d'avion à turbine à gaz. A ses extrémités axiales, la tuyère présente des parties dont le profil forme un angle, lesquelles, au stade du renfort fibreux, constituent des parties de raidissement.

L'invention est en particulier remarquable en ce qu'elle permet d'obtenir des tuyères ou divergents de tuyère légers à parois minces pouvant avoir des dimensions relativement importantes, notamment une dimension axiale au moins égale à 800 mm et un diamètre interne à l'extrémité aval au moins égal à 1000 mm.

Dans le cas de tuyères de moteurs aéronautiques, le matériau composite peut être un matériau composite à matrice céramique, ou CMC avec un renfort fibreux en fibres de céramique, par exemple en carbure de silicium, et une matrice également en céramique, par exemple aussi en carbure de silicium, la résine de consolidation étant alors de préférence une résine précurseur de céramique

Pour certaines applications, notamment pour des tuyères de moteurs aéronautiques, la conformation de la préforme fibreuse et la mise en forme du renfort fibreux peut être réalisée sur une forme femelle dont la surface intérieure reproduit la géométrie désirée d'une surface externe de la tuyère.

On notera aussi que l'invention est applicable à la réalisation de divergents de tuyères ou de tuyères non nécessairement totalement axisymétriques, comme c'est le cas de la tuyère de la figure 12.

## Revendications

1. Procédé de réalisation d'une tuyère ou d'un divergent de tuyère à paroi mince en un matériau composite comprenant un renfort fibreux densifié par une matrice, le procédé comprenant :
- l'obtention de panneaux en une texture fibreuse obtenue par tissage tridimensionnel ;
- la formation d'une préforme fibreuse par conformation des panneaux sur une forme ayant une surface reproduisant la géométrie désirée d'une surface interne ou externe de la tuyère ou du divergent de tuyère à réaliser et par liaison des panneaux au niveau de bords en contact mutuel ;
- la formation d'un renfort fibreux consolidé par mise en forme de la préforme fibreuse imprégnée par une composition de consolidation comprenant une résine, la mise en forme étant réalisée entre la forme et une enveloppe appliquée contre la préforme fibreuse imprégnée de manière à obtenir un renfort fibreux consolidé ayant un taux volumique de fibres d'au moins 35%, et ayant sur au moins une plus grande partie de sa dimension axiale une épaisseur au plus égale à 5 mm formée par une couche unique de panneaux de texture fibreuse ; et
- la poursuite de la densification du renfort fibreux consolidé par infiltration chimique en phase gazeuse après pyrolyse de la résine de sorte qu'après densification une pièce est obtenue ayant pratiquement la forme et l'épaisseur de paroi de la tuyère ou du divergent de tuyère à réaliser.

2. Procédé selon la revendication 1, **caractérisé en ce que** la mise en forme de la préforme fibreuse est réalisée de manière à obtenir un renfort fibreux présentant des parties de raidissement intégrées au moins dans des parties d'extrémité axiale.

3. Procédé selon la revendication 2, **caractérisé en ce que** l'on obtient au moins une partie de raidissement en conférant à une partie d'extrémité axiale du renfort consolidé un profil formant un angle.

4. Procédé selon la revendication 2, **caractérisé en ce que** l'on obtient au moins une partie de raidissement par augmentation locale de l'épaisseur de paroi du renfort consolidé.

5. Procédé selon l'une quelconque des revendications 1 à 4, **caractérisé en ce que** les panneaux sont conformés sur la forme avec recouvrement de leurs bords voisins.

6. Procédé selon l'une quelconque des revendications 1 à 5, **caractérisé en ce que** l'on forme la préforme fibreuse avec au moins une sur-épaisseur s'étendant circonférentiellement tout autour d'un axe de la préforme, la sur-épaisseur étant obtenue par recouvrement mutuel de bords voisins de panneaux de texture fibreuse.

7. Procédé selon l'une quelconque des revendications 1 à 6, **caractérisé en ce que** les panneaux sont liés entre eux par couture.

8. Procédé selon l'une quelconque des revendications 1 à 7, **caractérisé en ce que**, lors de sa mise en forme pour former le renfort fibreux, la préforme fibreuse imprégnée est comprimée.

9. Procédé selon la revendication 8, **caractérisé en ce que**, lors de la compression de la préforme fibreuse imprégnée, l'on applique sur la préforme fibreuse une membrane déformable élastiquement sans formation de plis.

10. Procédé selon l'une quelconque des revendications 1 à 9, **caractérisé en ce que** l'mprégnation par la composition de consolidation est réalisée sur la texture fibreuse avant conformation des panneaux de texture fibreuse sur la forme.

11. Procédé selon l'une quelconque des revendications 1 à 10, **caractérisé en ce que**, avant mise en forme de la préforme fibreuse pour former le renfort fibreux, une pré-réticulation de la résine de la composition de consolidation est réalisée.

12. Procédé selon les revendications 10 et 11, **caractérisé en ce que** la pré-réticulation est réalisée au moins en partie avant conformation des panneaux de texture fibreuse imprégnée sur la forme.

13. Tuyère ou divergent de tuyère à paroi mince et en matériau composite tel qu'obtenu par un procédé selon l'une quelconque des revendications 1 à 12 ayant sur la plus grande partie de sa dimension axiale une épaisseur au plus égale à 3 mm.

14. Tuyère ou divergent de tuyère selon la revendication 13, **caractérisé en ce que** ladite épaisseur est comprise entre 1 mm et 2 mm.

15. Tuyère ou divergent de tuyère selon l'une quelconque des revendications 13 et 14 ayant une dimension axiale au moins égale à 800 mm et un diamètre interne à l'extrémité aval au moins égal à 1000 mm.

## Patentansprüche

1. Verfahren zur Herstellung einer Düse oder eines divergenten Düsenteils mit dünner Wand aus einem Verbundwerkstoff mit einer matrixverdichteten Faserverstärkung, wobei das Verfahren umfaßt:
- das Erhalten von Paneelen aus einer durch dreidimensionales Weben erhaltenen Faserstruktur,
- das Ausbilden eines Faservorformlings durch Gestalten der Paneele auf einer Form, die eine Oberfläche aufweist, welche die gewünschte Geometrie einer Innen- oder Außenfläche der/des herzustellenden Düse oder divergenten Düsenteils nachbildet, und durch Verbinden der Paneele im Bereich von in gegenseitigem Kontakt befindlichen Kanten,
- das Ausbilden einer verfestigten Faserverstärkung durch Informbringen des mit einer ein Harz umfassenden Verfestigungszusammensetzung imprägnierten Faservorformlings, wobei das Informbringen zwischen der Form und einer an den imprägnierten Faservorformling angelegten Hülle vollzogen wird, um eine verfestigte Faserverstärkung zu erhalten, die einen Faservolumenanteil von wenigstens 35 % hat und über wenigstens einen größeren Teil ihrer axialen Abmessung eine Dicke von höchstens gleich 5 mm, die durch eine einzige Schicht von Faserstrukturpaneelen gebildet ist, aufweist, und
- das Fortsetzen der Verdichtung der verfestigten Faserverstärkung durch chemische Gasphaseninfiltration nach der Pyrolyse des Harzes, so daß nach dem Verdichten ein Teil erhalten wird, das praktisch die Form und die Wanddicke der/des herzustellenden Düse oder divergenten Düsenteils aufweist.

2. Verfahren nach Anspruch 1, **dadurch gekennzeichnet, daß** das Informbringen des Faservorformlings durchgeführt wird, um eine Faserverstärkung zu erhalten, die wenigstens in axialendseitige Teile integrierte Versteifungsteile aufweist.

3. Verfahren nach Anspruch 2, **dadurch gekennzeichnet, daß** wenigstens ein Versteifungsteil dadurch erhalten wird, daß einem axialendseitigen Teil der verfestigten Verstärkung ein einen Winkel bildendes Profil verliehen wird.

4. Verfahren nach Anspruch 2, **dadurch gekennzeichnet, daß** wenigstens ein Versteifungsteil durch lokale Erhöhung der Wanddicke der verfestigten Verstärkung erhalten wird.

5. Verfahren nach einem der Ansprüche 1 bis 4, **dadurch gekennzeichnet, daß** die Paneele mit Überlappen ihrer benachbarten Kanten auf der Form gestaltet werden.

6. Verfahren nach einem der Ansprüche 1 bis 5, **dadurch gekennzeichnet, daß** der Faservorformling mit wenigstens einer Überdicke, die sich umfangseitig um eine ganze Achse des Vorformlings erstreckt, ausgebildet wird, wobei die Überdicke durch gegenseitiges Überlappen benachbarter Kanten von Faserstrukturpaneelen erhalten wird.

7. Verfahren nach einem der Ansprüche 1 bis 6, **dadurch gekennzeichnet, daß** die Paneele durch Nähen untereinander verbunden sind.

8. Verfahren nach einem der Ansprüche 1 bis 7, **dadurch gekennzeichnet, daß** während seines Informbringens zum Ausbilden der Faserverstärkung der imprägnierte Faservorformling verdichtet wird.

9. Verfahren nach Anspruch 8, **dadurch gekennzeichnet, daß** während des Verdichtens des imprägnierten Faservorformlings auf den Faservorformling eine ohne Faltenbildung elastisch verformbare Membran aufgebracht wird.

10. Verfahren nach einem der Ansprüche 1 bis 9, **dadurch gekennzeichnet, daß** das Imprägnieren mit der Verfestigungszusammensetzung an der Faserstruktur vor Gestalten der Faserstrukturpaneele auf der Form durchgeführt wird.

11. Verfahren nach einem der Ansprüche 1 bis 10, **dadurch gekennzeichnet, daß** vor dem Informbringen des Faservorformlings zum Ausbilden der Faserverstärkung eine Vorvernetzung des Harzes der Verfestigungszusammensetzung vollzogen wird.

12. Verfahren nach den Ansprüchen 10 und 11, **dadurch gekennzeichnet, daß** die Vorvernetzung wenigstens teilweise vor Gestalten der Paneele aus imprägnierter Faserstruktur auf der Form vollzogen wird.

13. Düse oder divergentes Düsenteil mit dünner Wand und aus Verbundwerkstoff, wie sie/es durch ein Verfahren nach einem der Ansprüche 1 bis 12 erhalten wird, die/das über den Großteil ihrer/seiner axialen Abmessung eine Dicke von höchstens gleich 3 mm aufweist.

14. Düse oder divergentes Düsenteil nach Anspruch 13, **dadurch gekennzeichnet, daß** die Dicke zwischen 1 mm und 2 mm beträgt.

15. Düse oder divergentes Düsenteil nach einem der Ansprüche 13 und 14, die/das eine axiale Abmessung von wenigstens gleich 800 mm und einen Innendurchmesser am stromabwärtigen Ende von wenigstens gleich 1000 mm aufweist.

## Claims

1. A method of making a thin-walled nozzle or nozzle divergent section out of composite material comprising fiber reinforcement densified by a matrix, the method comprising:
· obtaining panels of a fiber texture obtained by three-dimensional weaving;
· forming a fiber preform by conforming the panels on a former having a surface that reproduces the shape desired for an inner or outer surface of the nozzle or the nozzle divergent section that is to be made, and by connecting together panels via mutually contacting edges;
· forming consolidated fiber reinforcement by shaping the fiber preform impregnated with a consolidation composition comprising a resin, shaping being performed between the former and a jacket applied against the impregnated fiber preform so as to obtain consolidated fiber reinforcement having a fiber volume percentage of at least 35%, and having over at least a major fraction of its axial dimension a thickness of no more than 5 mm formed by a single layer of fiber texture panels; and
· continuing densification of the consolidated fiber reinforcement by chemical vapor infiltration after pyrolyzing the resin so that after densification a part is obtained that has practically the shape and the wall thickness of the nozzle or nozzle divergent section that is to be made.

2. A method according to claim 1, **characterized in that** the fiber preform is shaped so as to obtain fiber reinforcement presenting stiffener portions integrated at least in axial end portions thereof.

3. A method according to claim 2, **characterized in that** at least one stiffener portion is obtained by imparting an angle-forming profile to an axial end portion of the consolidated reinforcement.

4. A method according to claim 2, **characterized in that** at least one stiffener portion is obtained by locally increasing the wall thickness of the consolidated reinforcement.

5. A method according to any one of claims 1 to 4, **characterized in that** the panels are conformed on the former with their adjacent edges overlapping.

6. A method according to any one of claims 1 to 5, **characterized in that** the fiber preform is formed with at least one extra thickness extending circumferentially all around an axis of the preform, the extra thickness being obtained by mutual overlapping of adjacent edges of fiber texture panels.

7. A method according to any one of claims 1 to 6, **characterized in that** the panels are bonded together by stitching.

8. A method according to any one of claims 1 to 7, **characterized in that**, while being shaped to form the fiber reinforcement, the impregnated fiber preform is compressed.

9. A method according to claim 8, **characterized in that** during compression of the impregnated fiber preform, a diaphragm that is elastically deformable without forming creases is applied on the fiber preform.

10. A method according to any one of claims 1 to 9, **characterized in that** impregnation with the consolidation composition is performed on the fiber texture prior to conforming the fiber texture panels on the former.

11. A method according to any one of claims 1 to 10, **characterized in that**, prior to conforming the fiber preform in order to form the fiber reinforcement, the resin of the consolidation composition is pre-cured.

12. A method according to claims 10 and 11, **characterized in that** pre-curing is performed at least in part prior to conforming the impregnated fiber texture panels on the former.

13. A thin-walled nozzle or nozzle divergent section made of composite material as obtained by the method according to any one of claims 1 to 12, and having thickness of no more than 3 mm over the major fraction of its axial dimension.

14. A nozzle or nozzle divergent section according to claim 13, **characterized in that** said thickness lies in the range 1 mm to 2 mm.

15. A nozzle or nozzle divergent section according to claim 13 or claim 14, having an axial dimension of not less than 800 mm and an inside diameter at its downstream end of not less than 1000 mm.
